Europäisches Patentamt

European Patent Office

Office européen des brevets

(19)

(11) Veröffentlichungsnummer: **0 130 370**
**B1**

(12) **EUROPÄISCHE PATENTSCHRIFT**

(45) Veröffentlichungstag der Patentschrift:
25.11.87

(21) Anmeldenummer: **84106150.0**

(22) Anmeldetag: **30.05.84**

(51) Int. Cl.⁴: **A 01 N 25/04**

(54) Verfahren zur Herstellung von flüssigen Pflanzenschutzmittelkombinationen.

(30) Priorität: **01.06.83 DE 3319796**

(43) Veröffentlichungstag der Anmeldung:
**09.01.85 Patentblatt 85/2**

(45) Bekanntmachung des Hinweises auf die Patenterteilung:
**25.11.87 Patentblatt 87/48**

(84) Benannte Vertragsstaaten:
**AT BE CH DE FR GB IT LI NL SE**

(56) Entgegenhaltungen:
**EP-A-0 010 972**
**EP-A-0 042 688**
**DE-A-2 924 403**
**GB-A-1 593 412**

(73) Patentinhaber: **HOECHST AKTIENGESELLSCHAFT,**
**Postfach 80 03 20, D-6230 Frankfurt am Main 80**
**(DE)**

(72) Erfinder: **Albrecht, Konrad, Dr., Sodener Strasse**
**64, D-6233 Kelkheim (Taunus) (DE)**
Erfinder: **Frisch, Gerhard, Dr., Westerwaldstrasse**
**7, D-6393 Wehrheim/Taunus (DE)**

EP 0 130 370 B1

LIBER, STOCKHOLM 1987

## Beschreibung

Pflanzenschutzmittel, die auf verschiedener Basis formuliert werden, lassen sich nicht ohne probleme zu einheitlichen Formulierungen kombinieren. Oft sind solche Pflanzenschutzmittelkombinationen nicht lagerstabil und neigen zu Entmischungen oder Mehrphasenbildungen. In vielen Fällen umgeht man diese Probleme, indem man die Herstellung der einzelnen Kombinationen durch einfaches Vermischen direkt vor der Anwendung vornimmt (sog. Tankmischungen) oder die Kombinationen der einzelnen Formulierungen als Twinpack bzw. Polypack anbietet.

Insbesondere problematisch ist die Herstellung von Pflanzenschutzmittelkombinationen in den Fällen, in denen der Wirkstoff in einer organischen oder wäßrigen Lösung vorliegt, und diese Lösung mit einer Dispersion eines anderen Wirkstoffes kombiniert werden soll.

Beim Vermischen solcher Formulierungen, beispielsweise durch Zusammengeben in einem Rührkessel unter Rühren, können Agglomeratbildung, Ausflockung, Phasentrennung, Bildung von zähen Verklumpungen, Ausölung und ähnliche unerwünschte Effekte auftreten. Weiterhin kann es beim Verrühren zu einer ungenügenden Durchmischung kommen, wobei die gewünschte Homogenisierung ausbleibt. Im Extremfall können sogar starke Verklumpungen auftreten; das Gemisch kann breiartig bis fest werden, so daß ein Weiterarbeiten unmöglich ist.

Überraschenderweise lassen sich solche Pflanzenschutzmittelkombinationen unter geeigneter Verwendung von Kolloidmühlen problemlos herstellen.

Als Kolloidmühle läßt sich insbesondere die Zahnscheiben-, Korundscheiben oder Naßschneidemühle (s. D. Seidl, Maschinenmarkt, Würzburg, 85 (1979), 44), bevorzugt die Zahnscheibenkolloidmühle verwenden. Diese Kolloidmühlen werden zwar bereits bei der Herstellung von Pflanzenschutzmittelformulierungen, jedoch für einen anderen Zweck verwendet; so dienten sie bisher lediglich zur Vorzerkleinerung von Pflanzenschutzwirkstoffen.

Gegenstand der vorliegenden Erfindung ist nun ein Verfahren zur Herstellung von flüssigen Pflanzenschutzmittelkombinationen, die zwei oder mehrere Wirkstoffe auf der Basis einer Wirkstoffdispersion in Kombination mit einer wäßrigen oder organischen Wirkstofflösung enthalten, dadurch gekennzeichnet, daß man die Wirkstoffdispersion in einer Kolloidmühle mit der Wirkstofflösung vermischt.

Die Wirkstoffdispersion und Wirkstofflösung wird kurz vor Eintritt in die Mühle zusammengegeben.

Zur optimalen Durchmischung wird hierbei zunächst die Wirkstoffdispersion über einen beispielsweise trichterförmigen Aufsatz in die Kolloidmühle eingeleitet. Infolge der Sogwirkung bildet sich hierbei in der einfließenden Diapersion ein; trichterförmige Einbuchtung, im folgenden "Trombe" genannt. Über ein Einlaßrohr läßt man dann die Wirkstofflösung in diese Trombe hineinfließen. Hierbei lassen sich die Durchflußmengen über eine Dosierpumpe steuern. Es kann jedoch auch umgekehrt verfahren werden, in der Weise, daß die Wirkstoffdispersion in die Wirkstofflösung eingeleitet wird.

Beide Komponenten werden aufgrund der hohen auftretenden Scherkräfte beim Durchgang durch die Kolloidmühle innigst vermischt. Agglomeratbildungen, die Bildung von zähen Konglomeraten, Ausflockungen aufgrund von starken Konzentrationsschwankungen oder Phasentrennungen beim Zusammentreffen der beiden Komponenten werden dabei im Entstehen wieder zerstört und können somit vermieden werden. Es resultieren homogene Kombinationsprodukte, die sich durch gute Stabilitäts- und Anwendungseigenschaften auszeichnen. Ein weiterer Vorteil des erfindungsgemäßen Verfahrens besteht darin, daß man es kontinuierlich durchführen kann. Die Dispersionsproduktion als solche muß nicht unterbrochen werden, da die Zugabe der Wirkstofflösung erst nach dem üblichen Naßmahlvorgang (für die Herstellung der Dispersion) vonstatten geht.

Reinigungsarbeiten der Rühr- und Mahlgeräte können unterbleiben, wodurch die Produktionsgeschwindigkeit erhöht wird.

Beim erfindungsgemäßen Verfahren kann das Verhältnis Wirkstoffdispersion : Wirkstofflösung beliebig variiert werden. Es liegt bevorzugt im Bereich von 1 : 25 bis 25 : 1.

Das Verfahren kann im Temperaturbereich zwischen 0° und 70°C, vorzugsweise zwischen 10° und 40°C je nach Art der eingesetzten Dispersion bzw. Wirkstofflösung durchgeführt werden.

Es lassen sich nach dem erfindungsgemäßen Verfahren beliebige Wirkstoffkombinationen herstellen.

Für die Wirkstoffdispersion kommen daher beispielsweise infrage die Wirkstoffe Diuron, Linuron, Atrazin, Simazin, Cyanazin, Isoproturon, Captafol, Carbendazim, Fentinhydroxid, Endosulfan, Chlortoluron, Chlorothalonil.

Für die Wirkstofflösungen kommen beispielsweise infrage die Wirkstoffe Monolinuron, Pendimethalin, Phosphinothricin, Glyphosate und die Salze der zwei letztgenannten Verbindungen, die als Wuchsstoffe bekannten Verbindungen aus der Reihe der Phenoxyessigsäurederivate oder der Phenoxypropionsäurederivate, Phenoxyphenoxypropionsäureester-Verbindungen wie Diclofopmethyl, halogenierte Hydroxybenzonitrile, Benzothiadiazine, Dinosebacetat, Pyrazophos, Dowco 433 oder Trifluralin. Es können beispielsweise auch solche Wirkstoffe eingesetzt werden, wie die substituierten Nitrodiphenylether der EP-A-80 301 572.

Sowohl die Wirkstoffdispersion wie auch die Wirkstofflösung können einen oder mehrere, insbesondere ein bis zwei Wirkstoffe enthalten.

Die oben und auch weiter unten genannten Wirkstoffe sind bekannte Handelsprodukte, die beispielsweise zum großen Teil in Pesticide Manual, British Corp. Protection Council, 5. Auflage (1977) beschrieben sind.

Die Herstellung der Dispersionen der einen Wirkstoffkomponente erfolgt nach bekannten Methoden beispielsweise gemäß DE-A-29 24 403. Zur Herstellung der organischen Lösungen können die üblichen organischen Lösungsmittel wie Xylole, Methylnaphthaline, die ®Solvesso-Typen wie ®Solvesso 100 (Kp. 162 - 177°C), Phthalsäurealkylester, Alkohole wie Butanol, Ketone wie Cyclohexanon oder Dimethylformamid verwendet werden, wobei diese noch handelsübliche Emulgatoren enthalten können.

Insbesondere ist das Verfahren zur Produktion von Kombinationen geeignet, die wäßrige Salzlösungen enthalten. Denn bei herkömmlichen Herstellungsverfahren treten in diesen Fällen die eingangs erwähnten Probleme besonders häufig auf.

Nach dem erfindungsgemäßen Verfahren lassen sich auf einfache Weise insbesondere Kombinationen von Isoproturon-Dispersionen [N,N-Dimethyl-N'-(4-isopropyl-phenyl)-harnstoff] mit wäßrigen Lösungen von Mecoprop [2-(4-Chlor-2-methyl-phenoxy)-propionsäure] Dichlorprop [2-(2,4-Dichlorphenoxy)-propionsäure)], MCPA (4-chlor-2-methylphenoxyessigsäure), 2,4 D (2, 4-Dichlorphenoxyessigsäure), Bentazon (3-Isopropyl-2,1,3-benzothiadiazinon-(4)-2,2-dioxid), Trifluralin(2,6-Dinitro-N,N-dipropyl-4-trifluormethyl-anilin), Dowco 433 [4-Amino-3,5-dichlor-6-fluor-2-pyridinoxyessigsäure-isooctylester], Bromoxynil (3,4-Dibrom-4-hydroxybenzonitril), Ioxynil (3,5-Dijod-4-hydroxy-benzonitril) oder deren Salze herstellen. Als Salze können die üblichen wasserlöslichen Salze wie Alkalisalze, Ammoniumsalze oder Mono, Di-, Tri- oder Tetraalkylammoniumsalze eingesetzt werden.

Die erfindungsgemäß hergestellten Kombinationsprodukte sind überraschenderweise einwandfrei lagerstabil und weisen keinerlei Probleme bei der Anwendung auf.

Nachstehende Beispiele dienen zur Erläuterung der Erfindung:

**Beispiel 1**

34,5 % einer Isoproturon-Dispersion der folgenden Zusammensetzung.

46 Gew-% Wirkstoff
7 Gew-% eines Kondensationsproduktes von

Formaldehyd mit Kresolen
3 Gew-% Natriumsalz von (C$_{12}$-C$_{18}$) Alkylpolyglykoletherphosphat mono-/-diester, (®Forlanit P, Henkel KGaA)
2 Gew-% Entschäumer
0,2 Gew-% Aluminiumsilikatpulver (Montmorillionit)
1 Gew-% ®Darvan Nr. 3, Vanderbilt Corp. USA
5 Gew-% Ethylenglykol
35,8 Gew-% Wasser

werden in eine Zahnscheiben-Kolloidmühle (Typ: ®PUC-Mühle der Firma Probst und Clasen) über einen Trichter so eingeleitet, daß sich eine Trombe bildet. In diese Trombe werden über eine zweite Dosierpumpe 65,5 Gew-% einer Trifluralinlösung der folgenden Zusammensetzung

41 Gew-% Trifluralin
48 Gew-% Xylol
11 Gew-% ®Soprophor FL (Triäthanolaminsalze eines Gemisches von Phosphor- mono- und -dieestern eines Tristyrylphenol-Polyglykolethers mit 18 AeO-Einheiten, Firma Rhone Poulenc)

Im Volumenverhältnis von ca. 1 : 1 bei Raumtemperatur eingepumpt; die beiden Komponenten werden intensiv miteinander vermahlen.

Das so hergestellte Kombinationsprodukt war 3 Monate bei 50°C lagerstabil.

**Beispiel 2**

56 Gew-% einer Carbendazim-Suspension (Carbendazim = 2-(Methoxycarbonylamino)-benzimidazol) der folgenden Zusammensetzung

40 Gew-% Wirkstoff
12 Gew-% Sulfobernsteinsäurehalbester-Na-Salz
3 Gew-% Na-Ligninsulfonat
0,5 Gew-% ®Darvan Nr. 3 (1 : 1 Gemisch aus Aluminosilikat und Ligninsulfonsäure-Na-Salz, Firma Vanderbilt Co.)
2 Gew-% Entschäumer
4 Gew-% Alkylpolyglykolether
4 Gew-% Ethylenglykol
34,5 Gew-% Wasser

werden, wie in Beispiel 1 beschrieben, mit 44 Gew-% einer Pyrazophos-Lösung der folgenden Zusammensetzung

60 Gew-% Pyrazophos
40 Gew-% Methylnaphthalin
vermahlen.

Das so hergestellte Produkt ist 3 Monate bei 50°C lagerstabil.

## Beispiel 3

44 Gew-% einer Isoproturon Dispersion der folgenden Zusammensetzung

50,0 Gew-% Isoproturon
6,0 Gew-% Natriumsalz eines Kresol-Formaldehyd-Natriumsulfit-Kondensates
3,0 Gew-% Natriumsalz von ($C_{12}$-$C_{18}$)Alkylpolyglykoläther-phosphat mono-/-diester (Forlanit P, Henkel KGaA)
0,2 Gew-% Alumosilikat-Pulver (Montmorillonit)
1,0 Gew-% Silikon-Entschäumer (SE 2, Wacker GmbH)
4,0 Gew-% Äthylenglykol
35,8 Gew-% Wasser

werden, wie in Beispiel 1 beschrieben mit 56 Gew-% einer wäßrigen Mecoprop-Dimethylamin-Salzlösung (60 % Wirkstoff) vermahlen.

Das so hergestellte Produkt ist 3 Monate bei 50°C lagerstabil.

## Beispiel 4

22 Gew-% einer Isoproturon-Dispersion der in Beispiel 3 genannten Zusammensetzung werden wie in Beispiel 1 beschrieben mit 78 Gew-% einer wäßrigen Lösung aus Mecoprop-Kaliumsalz (45 Gew-%) und Ioxynil-Kaliumsalz (15 Gew-%) vermahlen.

Das so hergestellte Produkt ist 3 Monate bei 50°C lagerstabil.

## Beispiel 5

49,5 Gew-% einer Isoproturon-Dispersion der in Beispiel 3 genannten Zusammensetzung werden, wie in Beispiel 1 beschrieben, mit 78 Gew-% einer wäßrigen Salzlösung von ®Basagran DP (Gemisch aus Bentazon und Dichlorprop-Salzen, BASF) vermahlen.

Das so hergestellte Produkt ist 3 Monate bei 50°C lagerstabil.

## Vergleichsbeispiel

Legt man die in Beispiel 4 genannte Mecoprop-Ioxynil-Salzlösung (insgesamt 78 Gew-%) in einem Rührkessel vor und fügt unter Rühren die in Beispiel 4 genannte Isoproturon-Dispersion (22 Gew-%) hinzu, entstehen Agglomerate und Zusammenbackungen, die auch durch heftiges Rühren nicht zu verhindern oder zu zerstören sind. Solche Mischungen sind für eine Anwendung völlig ungeeignet.

## Patentansprüche

1. Verfahren zur Herstellung von flüssigen Pflanzenschutzmittelkombinationen, die zwei oder mehrere Wirkstoffe auf der Basis einer Wirkstoffdispersion in Kombination mit einer wäßrigen oder organischen Wirkstofflösung enthalten, dadurch gekennzeichnet, daß man die Wirkstoffdispersion in einer Kolloidmühle mit der Wirkstofflösung vermischt.

2. Verfahren gemäß Anspruch 1, dadurch gekennzeichnet, daß man die Wirkstoffdispersion in die Kolloidmühle einleitet, bis sich eine Trombe bildet, und man über ein Einlaßrohr die Wirkstofflösung in diese Trombe hineinfließen läßt.

3. Verfahren gemäß Ansrüchen 1 und 2, dadurch gekennzeichnet, daß man als Kolloidmühle die Zahnscheiben-, Korundscheiben- oder Naßschneidemühle einsetzt.

4. Verfahren gemäß Ansprüchen 1 bis 3, dadurch gekennzeichnet, daß als Kolloidmühle die Zahnscheibenkolloidmühle eingesetzt wird.

5. Verfahren gemäß Ansprüchen 1 bis 4, dadurch gekennzeichnet, daß Wirkstoffdispersionen mit Diuron, Linuron, Atrazin, Simazin, Cyanazin, Isoproturon, Captafal, Carbendazim, Fentinhydroxid, Endosulfan, Chlortoluron, Chlorothalonil als Wirkstoff und Wirkstofflösungen mit Pendimethalin, Phosphinothricin, Glyphosate, und deren Salze, Phenoxyessigsäurederivaten, Phenoxypropionsäurederivaten, Phenoxyphenoxypropionsäureester-Verbindungen, halogenierten Hydroxybenzonitrilen, Benzothiadiazinen, Dinosebacetat, Pyrazophos, Dowco 433 oder substituierten Nitrodiphenylether als Wirkstoff eingesetzt werden.

6. Verfahren gemäß Ansprüchen 1 bis 5, dadurch gekennzeichnet, daß Wirkstoffdispersionen mit Isoproturon als Wirkstoff und Wirkstofflösungen mit Mecoprop, Dichlorprop, MCPA, 2,4-D, Bentazon, Trifluralin, Dowco 433, Bromioxynil oder Ioxynil oder deren Salze als Wirkstoff eingesetzt werden.

## Claims

1. A process for the preparation of liquid plant protection agent combinations containing two or more acitve ingredients on the base of an active ingredient dispersion combined with an aqueous or organic active ingredient solution characterized in that said active ingredient dispersion is mixed in a colloid mill with said active ingredient solution.

2. The process as claimed in claim 1, wherein the active ingredient dispersion is introduced into a collcid mill until a whirl forms, and the active ingredient solution is metered through a delivery tube into this whirl.

3. The process as claimed in either of claims 1 and 2, wherein a toothed disc, corundum disc or wet cutting mill is used as the colloid mill.

4. The process as claimed in any one of claims 1 to 3, wherein a toothed disc mill is used as the colloid mill.

5. The process as claimed in any one of claims 1 to 4, wherein active ingredient dispersions with Diuron, Linuron, Atrazin, Simazin, Cyanazin, Isoproturon, Captafol, Carbendazim, Fentinhydroxid, Endosulfan, Chlortoluron, Chlorothalonil as the active ingredient and active ingredient solutions with Pendimethalin, Phosphinothricin, Glyphosate and salts thereof, derivatives of phenoxy acetic acid or phenoxy propionic acid, derivatives of phenoxyphenoxy propionic acid esters, halogenated hydroxybenzonitrile, benzothiadiazines, Dinosebacetate, Pyrazophos, Dowco 433 or substituted nitro-diphenyl ethers as the active ingredient, are used.

8. The process as claimed in any one of claims 1 to 5, wherein active ingredient dispersions with Isoproturon as the active ingredient and active ingredient solutions with Mecoprop, Dichlorprop, MCPA, 2,4-D, Bentazon, Trifluralin, Dowco 433, Bromioxynil, Ioxynil or salts thereof as the active ingredient, are used.

**Revendications**

1. Procédé pour préparer des combinaisons liquides de produits phytosanitaires, qui contiennent deux ou plusieurs substances actives à base d'une dispension de substance(s) active(s) en combinaison avec une solution aqueuse ou organique de substance(s) active(s), procédé caractérisé en ce qu'on mélange dans un broyeur à colloïdes la dispersion de substance(s), active(s) avec la solution de substance(s) active(s).

2. Procédé selon la revendication 1, caractérisé en ce qu'on introduit dans le broyeur à colloïdes la dispersion de substance(s) active(s), jusqu'à formation d'une trombe, et l'on fait couler dans cette trombe, par l'intermédiaire d'un tube d'admission, la solution de substance(s) active(s).

3. Procédé selon les revendications 1 et 2, caractérisé en ce qu'on utilise comme broyeur à colloïdes un broyeur à disques dentés, un broyeur à disques de corindon ou un broyeur à couteaux fixes et mobiles travaillant au mouillé.

4. Procédé selon l'une quelconque des revendications 1 à 3, caractérisé en ce qu'on utilise comme broyeur à colloïdes le broyeur à disques dentés pour colloïdes.

5. Procédé selon l'une quelconque des revendications 1 à 4, caractérisé en ce qu'on utilise dss dispersions de substance(s) active(s) compontant du Diuron, du Linunon, de l'Atrazine, de la Simazine, de l'Isoproturon, du Captafol, du Carbendazime, du Pentine hydroxyde, de l'Endosulfan, du Chlortoluron, du Chlorothalonil comme substance(s) active(s) et des solutions de substance(s) active(s) comportant de la Pendiméthaline, de la Phosphinotricine, des Glyphosates et leurs sels, des dérivés de l'acide phénoxyacétique, des dérivés de l'acide phénoxypropionique, des esters d'acids phénoxyphénoxypropionique, des hydroxybenzonitriles halogénés, des benzothiadiazines, de l'acétate de dinosèbe, du Pyrazophos, "Dowco 433" ou des oxydes de diphényles nitrés substitués comme substance(s) active(s).

6. Procédé selon l'une quelconque des revendications 1 à 5, caractérisé en ce qu'on utilise dss dispensions de substance active comportant de l'Isoproturon comme substance active, et des solutions de substance(s) active(s) comportant du Mecoprop, du Dichlorprop, du MCPA, du 2,4-D, de la Bentazone, de la Trifluraline, du "Dowco 433", du Bromioxynil ou de l'Ioxynil, ou leurs sels, comme substance(s) active(s).